# FASCICULE DE BREVET EUROPEEN

(11) **EP 3 225 027 B1**
(45) Date de publication et mention de la délivrance du brevet: **12.05.2021**
(21) Numéro de dépôt: 15817453.2
(22) Date de dépôt: 24.11.2015
(51) Int. Cl.: H04N 19/15, H04N 19/17, H04N 19/40, H04N 19/48, H04N 19/103

(54) **PROCÉDÉ DE COMPOSITION D'UNE REPRÉSENTATION VIDÉO INTERMÉDIAIRE**
VERFAHREN ZUR ZUSAMMENSTELLUNG EINES ZWISCHENVIDEODARSTELLUNG
METHOD FOR COMPOSING AN INTERMEDIATE VIDEO REPRESENTATION

(30) Priorité: 27.11.2014 FR 1461564
(43) Date de publication de la demande: 04.10.2017
(73) Titulaire: ORANGE, 75015 Paris (FR)
(72) Inventeur: HOUZE, Patrice, 35700 Rennes (FR); HENRY, Félix, 35760 Saint Gregoire (FR)
(86) Numéro de dépôt international: PCT/FR2015/053197
(87) Numéro de publication internationale: WO 2016/083730

(56) Documents cités:
- EP-A2- 1 400 929
- WO-A1-2006/017382
- US-B1- 8 270 487
- MASAYUKI INOUE ET AL: "Interactive panoramic video streaming system over restricted bandwidth network", PROCEEDINGS OF THE INTERNATIONAL CONFERENCE ON MULTIMEDIA, MM '10, 1 janvier 2010 (2010-01-01), page 1191, XP055120221, New York, New York, USA DOI: 10.1145/1873951.1874184 ISBN: 978-1-60-558933-6

## Description

### DOMAINE TECHNIQUE

L'objet de la présente invention se situe dans le domaine du codage de vidéo numérique et plus précisément dans le domaine de la compression vidéo.

### ETAT DE LA TECHNIQUE

Les technologies d'accès à internet permettent aujourd'hui la consultation d'une séquence vidéo de haute qualité sans téléchargement préalable de la séquence complète. Pour cela, les décodeurs vidéo mettent en œuvre des techniques de lecture en continu dites de « streaming » vidéo selon lesquelles les paquets de données sont téléchargés à un rythme correspondant au débit de la vidéo encodée. Le décodage et la restitution d'une trame vidéo peuvent ainsi être réalisés en parallèle du téléchargement des trames suivantes.

L'inconvénient de cette solution est l'impossibilité de s'adapter à la qualité de la connexion de l'utilisateur. Il est ainsi souvent nécessaire pour le diffuseur d'offrir, pour la même séquence vidéo, plusieurs versions encodées à des débits différents afin que les lecteurs vidéo des utilisateurs puissent choisir une version compatible avec la connexion.

Les standards de transport vidéo modernes tels que MPEG-DASH (Dynamic Adaptative Streaming over HTTP) prévoient le découpage des flux vidéo en une pluralité de segments, chacun des segments étant disponible en différentes versions encodées à différents débits. Ainsi, pendant la lecture d'un segment par un client MPEG-DASH, le client sélectionne automatiquement le segment suivant parmi les différentes versions disponibles en fonction des conditions réseau détectées. Le choix de la version la plus adaptée aux conditions réseau est ainsi réalisé automatiquement par le client MPEG-DASH, de façon transparente pour l'utilisateur.

Malgré tout l'intérêt de cette solution, le choix reste limité aux versions mis à disposition par le diffuseur et n'est pas toujours optimal pour l'utilisateur. Par exemple, si une séquence vidéo est disponible en deux versions, la première version étant encodée à 4Mo/s et la seconde version étant encodée à 1Mo/s, un utilisateur disposant d'une connexion à 3.5Mo/s devra se contenter de la version de basse qualité. Ainsi, pour offrir la meilleure qualité à leurs utilisateurs, les diffuseurs doivent héberger de nombreuses versions d'un même contenu. Malheureusement, le codage et le stockage des différentes versions nécessitent une infrastructure importante qui a un coût non négligeable pour les diffuseurs, alors même que certaines versions seront très peu sollicitées par les utilisateurs.

Il est possible dans ce contexte de composer un flux vidéo à partir d'une pluralité de flux provenant de différentes sources. Le brevet US 8 270 487 B1 propose une solution en ce sens. Cependant, cette composition reste à la charge du décodeur.

Une autre approche pour réaliser l'adaptation à la bande passante du réseau consiste à utiliser un codage scalable. La scalabilité est la possibilité de pouvoir offrir un flux vidéo codé avec différents niveaux de qualité. Le signal est codé dans un seul flux binaire de manière à offrir la possibilité de décoder un flux de base et des flux dits de rehaussement dont la qualité augmente successivement. La scalabilité peut être mise en œuvre selon différentes modalités, spatiale, temporelle ou en qualité. Lorsqu'une scalabilité spatiale est mise en œuvre, les flux de rehaussement permettent d'améliorer la résolution du contenu. Une scalabilité temporelle permet d'offrir plusieurs fréquences temporelles du signal, les flux de rehaussement permettant d'augmenter progressivement la fréquence des images d'un flux vidéo décodé. Enfin, la scalabilité en qualité (ou SNR pour Signal to Noise Ratio) permet d'améliorer la qualité réduisant la distorsion de quantification entre l'image originale et l'image reconstruite. Ces différentes modalités peuvent être utilisées conjointement ou indépendamment les unes des autres.

La scalabilité permet donc une adaptation fine de la qualité d'une séquence vidéo à la bande passante disponible. Toutefois, ces techniques induisent une complexité de codage et de décodage importante et nécessitent un surcoût de bande passante de l'ordre de 20%, ce qui est souvent contre-productif par rapport à un codage multi-débits tel que décrit précédemment.

Encore une autre approche consiste à découper la vidéo en sous parties, ou tuiles, pour s'adapter à la zone de visualisation de l'utilisateur et limiter ainsi le débit nécessaire. Par exemple, le document intitulé "Interactive panoramic video streaming system over restricted bandwidth network", de MASAYUKI INOUE ET AL (PROCEEDINGS OF THE INTERNATIONAL CONFERENCE ON MULTIMEDIA, MM '10, 1 janvier 2010, page 1191) décrit un système de navigation dans une vidéo panoramique ; la vidéo panoramique est divisée en tuiles qui peuvent être organisées selon plusieurs représentations de la séquence vidéo, correspondant à plusieurs qualités, et donc débits. Le document prévoit en outre de pouvoir sélectionner, au niveau du décodeur, des tuiles particulières correspondant à la zone de navigation sélectionnée par l'utilisateur. Le terminal n'est donc pas un terminal de streaming standard : il est modifié pour déterminer les tuiles à télécharger selon la vue courante sélectionnée par l'utilisateur et selon un fichier d'association débit-qualité transmis par le serveur.

Il existe donc un besoin pour une solution de streaming adaptatif qui soit capable de s'adapter de façon optimale à la bande passante disponible, qui ne nécessite pas l'hébergement de nombreuses versions d'un même contenu et qui ne provoque pas une consommation accrue de bande passante. En particulier, il existe un besoin pour offrir à un terminal standard de *streaming* une pluralité de représentations intermédiaires ayant un débit prédéterminé.

### RÉSUMÉ DE L'INVENTION

À cet effet, l'invention concerne un procédé de composition d'une représentation intermédiaire d'une séquence vidéo à partir d'au moins une première et une seconde représentation de ladite séquence vidéo, lesdites au moins une première et une seconde représentations étant partitionnées spatialement en une pluralité de tuiles, chaque tuile étant associée à des données compressées dans la représentation correspondante, le procédé étant caractérisé en ce que les tuiles sont décodables indépendamment les unes des autres et en ce qu'à un instant donné les au moins une première et une seconde représentations sont partitionnées de manière identique, le procédé comportant les étapes suivantes :
- Sélection, selon au moins un critère de qualité, d'un ensemble de tuiles formant une partition de la séquence, l'ensemble comprenant au moins une tuile provenant de la première représentation et au moins une tuile provenant de la seconde représentation,
- mémorisation de l'agencement des tuiles sélectionnées et de la représentation dont chacune d'elles est issue dans un fichier de description de manière à former une représentation composée de la séquence vidéo, dite représentation intermédiaire, dont le débit est compris entre le débit de la première représentation et le débit de la seconde représentation, et
- génération d'un fichier manifeste comprenant une URL vers ladite représentation intermédiaire,
- transmission du fichier manifeste vers un terminal, et à la réception d'une requête de téléchargement correspondant à l'URL comprise dans le fichier manifeste, transmission des données correspondantes vers le terminal

L'invention permet ainsi de composer une nouvelle représentation intermédiaire à partir d'au moins deux représentations différentes d'une même séquence, sans nécessiter l'encodage ni le stockage de la représentation composée. Pour cela, les images correspondant à un même instant dans les différentes représentations sont partitionnées de manière identique en une pluralité de tuiles de façon à ce qu'à chaque instant, le partitionnement d'une image dans une représentation corresponde au partitionnement de l'image correspondante dans les autres représentations.

Le terme tuile correspond ici à une zone rectangulaire définie spatialement pour une image ou un groupe d'image. Dans le contexte de l'invention, les images composant la séquence vidéo sont partitionnées en tuiles, les tuiles étant encodées de façon telle qu'elles peuvent être décodées de manière indépendante les unes des autres. Par exemple, la norme de codage vidéo HEVC (ISO/IEC 23008-2 MPEG-H Part 2 et ITU-T H.265) défini la notion de tuiles (« tiles » en anglais) pour permettre la parallélisation des processus d'encodage et de décodage et offre les outils nécessaires à un encodage vidéo tel que les tuiles puissent être décodées indépendamment les unes des autres.

La représentation intermédiaire est ainsi composée de tuiles décodables de façon indépendante et issues d'au moins deux des représentations disponibles. En ajustant le nombre de tuiles en provenance de l'une et l'autre des deux représentations, on peut obtenir différentes variantes de la représentation intermédiaire, sans le surcoût induit par les techniques de scalabilité classiques. D'autre part, contrairement aux techniques classiques d'encodage multi-débits, cette nouvelle représentation n'occupe pas d'espace supplémentaire sur les serveurs de diffusion. Le procédé peut ainsi permettre à un système de streaming vidéo d'adapter de façon optimale le flux vidéo à la bande passante disponible sans nécessiter l'hébergement de nombreuses versions d'un même contenu et sans provoquer de consommation accrue de la bande passante.

Selon une autre réalisation particulière, le procédé est tel qu'il comprend en outre des étapes de :
- Calcul du débit résultant de la représentation intermédiaire,
- Vérification que le débit résultant est inférieur à un seuil prédéterminé, et
- Sélection d'un nouvel ensemble de tuiles lorsque le débit résultant est supérieur au seuil prédéterminé.

Ainsi, lorsque les représentations à partir desquelles une nouvelle représentation est composée sont respectivement encodées à un premier débit et à un second débit, le procédé permet avantageusement d'obtenir une représentation dont le débit est compris entre celui de la première représentation et celui de la seconde représentation. En faisant varier le nombre de tuiles issues de l'une et l'autre des représentations, le procédé permet d'offrir des représentations à différents débits afin d'adapter finement le débit du flux vidéo à la bande passante disponible.

Selon une réalisation particulière, la représentation intermédiaire est composée à la demande, au fur et à mesure du décodage. La proportion de tuiles provenant de l'une ou l'autre des représentations pour composer la représentation intermédiaire peut alors varier au cours du temps en fonction de la bande passante disponible sur la connexion. Le procédé permet ainsi d'ajuster la qualité de la représentation en fonction de la bande passante disponible à un instant donné.

Selon un mode particulier de réalisation, le procédé est tel que le au moins un critère de sélection comprend le débit d'encodage des tuiles.

Les tuiles sont sélectionnées selon leur débit d'encodage dans l'une ou l'autre des différentes représentations. Le procédé de composition permet ainsi de sélectionner judicieusement des tuiles dans différentes représentation disponibles de façon à composer un flux dont le débit n'excède pas une limite fixée au préalable pour correspondre par exemple à la bande passante disponible sur le réseau.

Le procédé peut également comprendre, selon une autre réalisation particulière, une étape préalable d'obtention d'une information relative à la bande passante disponible sur le réseau. Le procédé est ainsi apte à composer une représentation dont le débit est optimal au regard des conditions réseau. Par exemple, la bande passante disponible peut être estimée à partir du niveau de remplissage d'une mémoire tampon d'un dispositif de décodage du flux vidéo.

Selon une réalisation particulière, le procédé est tel que le au moins un critère de sélection comprend une indication de qualité des tuiles.

De cette façon, le procédé permet d'obtenir une représentation de qualité intermédiaire entre différentes représentations pré-encodées. L'indication de qualité peut être par exemple une indication relative au rapport signal/bruit.

Selon un mode de réalisation particulier, le procédé est tel que l'étape de sélection des tuiles est en outre basée sur une analyse du contenu des images.

Le procédé se base sur des zones d'intérêts (ou ROI, pour « Région of Interest » en anglais) afin de sélectionner les tuiles dans les différentes représentations disponibles. Ces régions d'intérêt peuvent comprendre par exemple des visages ou du texte. Par exemple, ce mode de réalisation permet avantageusement de sélectionner des tuiles comportant des ROI dans une représentation de bonne qualité et d'autres tuiles ne comportant pas de ROI dans une représentation de moins bonne qualité. Le procédé permet ainsi d'obtenir une représentation de qualité intermédiaire qui préserve la qualité des éléments intéressants de la séquence.

Selon une réalisation particulière, une identification des tuiles contenant des régions d'intérêt est réalisée lors d'une étape préalable au codage de la séquence, les informations d'identification étant transmises à un dispositif mettant en œuvre le procédé de composition de façon à pouvoir composer un flux vidéo dont les régions d'intérêts peuvent être préservées d'une dégradation de la qualité.

Selon un mode particulier de réalisation, le procédé est tel que la sélection d'une tuile est réalisée en fonction d'au moins un critère de sélection d'au moins une tuile adjacente.

Le procédé permet ainsi de s'assurer que des tuiles adjacentes dans le flux composé ne présentent pas une différence de qualité importante. Par exemple, lorsqu'une représentation intermédiaire est composée à partir de 3 représentations pré-encodées de qualité différente, le procédé peut éviter qu'une tuile provenant de la représentation de la plus basse qualité soit adjacente à une tuile provenant de la représentation de la plus haute qualité. Le procédé permet ainsi de réaliser un lissage rendant moins perceptible les différences de qualité de tuiles contigües.

Selon une réalisation particulière, les tuiles qui composent la représentation intermédiaire sont sélectionnées lors d'une étape préalable au décodage et une description des différentes tuiles composant la séquence est mémorisée. Le procédé permet ainsi de précalculer un ensemble de tuiles permettant d'obtenir un flux vidéo dont le débit est déterminé au préalable. Par exemple, un diffuseur de contenu peut mettre à disposition de manière classique un certain nombre de représentations d'une séquence vidéo encodées à différents débits et pré-sélectionner des ensembles de tuiles à partir de ces représentations de façon à composer des représentations de la séquence à des débits intermédiaires. En stockant uniquement une description dans laquelle sont identifiées les tuiles permettant de composer des représentations intermédiaires, le diffuseur peut accroitre le nombre de représentations disponibles pour les utilisateurs tout en limitant l'espace de stockage additionnel nécessaire pour mémoriser ces représentations. D'autre part, le fait de sélectionner les tuiles au préalable minimise le temps de traitement lors de la consultation de la représentation.

Selon une autre réalisation particulière, le procédé est tel que le critère de sélection est transmis par un terminal de décodage.

Ainsi, un serveur de diffusion mettant en œuvre le procédé de composition peut recevoir une indication sur la façon de sélectionner les tuiles. Par exemple, un décodeur vidéo disposant d'une interface adaptée pour qu'un utilisateur sélectionne une zone de l'image peut transmettre un critère de sélection indiquant que les tuiles composant la zone sélectionnée par l'utilisateur doivent être sélectionnées dans une représentation de bonne qualité.

L'invention concerne également un procédé de téléchargement d'une représentation intermédiaire sur un terminal tel qu'il comporte des étapes de réception d'un fichier manifeste comprenant au moins une URL vers une représentation composée d'au moins une tuile provenant d'une première représentation et d'au moins une tuile provenant d'une seconde représentation, le débit de ladite représentation intermédiaire étant compris entre le débit de la première représentation et le débit de la seconde représentation, de transmission d'une requête de téléchargement de ladite représentation intermédiaire, et de réception de ladite représentation intermédiaire.

Le critère transmis peut être par exemple un critère de qualité, de débit ou de fréquence d'image. Par exemple, un terminal de décodage qui souhaite télécharger un contenu peut déterminer si le serveur est apte à lui fournir une représentation adaptée à sa connexion réseau. À la réception d'une telle information, un terminal de décodage vidéo peut émettre une requête de téléchargement en précisant un débit maximum pour la représentation de la séquence afin de recevoir une représentation composée selon le critère de débit transmis.

Selon une représentation particulière, le procédé de téléchargement est tel qu'il comporte en outre une étape de sélection sur une interface graphique de zones d'images dont la qualité doit être préservée dans la composition et une étape de transmission de cette sélection au serveur.

Un décodeur vidéo disposant d'une interface adaptée pour qu'un utilisateur sélectionne une zone de l'image peut ainsi transmettre un critère de sélection indiquant que les tuiles composant la zone sélectionnée par l'utilisateur doivent être sélectionnées par exemple dans une représentation de bonne qualité.

Selon une réalisation particulière, le procédé de téléchargement est tel qu'il comporte en outre une étape de transmission d'un critère de sélection des tuiles.

Ainsi, un terminal de décodage vidéo peut commander la sélection d'un ensemble particulier de tuiles. Par exemple, un terminal peut demander que des tuiles de basse qualité soient sélectionnées sur le pourtour de la vidéo et que des tuiles de bonne qualité soient sélectionnées au centre de celle-ci. Un terminal de décodage peut également offrir la possibilité à un utilisateur de sélectionner une zone de la vidéo qu'il souhaite visualiser avec une bonne qualité et transmettre le critère de sélection adapté pour que soient sélectionnées des tuiles de bonne qualité pour cette zone.

L'invention concerne aussi un dispositif de composition d'une représentation intermédiaire d'une séquence vidéo à partir d'au moins une première et une seconde représentation de ladite séquence vidéo, lesdites au moins une première et une seconde représentations étant partitionnées spatialement en une pluralité de tuiles, chaque tuile étant associée à des données compressées dans la représentation correspondante, le dispositif étant caractérisé en ce que les tuiles sont décodables indépendamment les unes des autres et en ce qu'à un instant donné les au moins une première et une seconde représentations sont partitionnées de manière identique, le dispositif comprenant des modules de sélection, selon au moins un critère de qualité, d'un ensemble de tuiles formant une partition de la séquence, l'ensemble comprenant au moins une tuile provenant de la première représentation et au moins une tuile provenant de la seconde représentation, de mémorisation de l'agencement des tuiles sélectionnées et de la représentation dont chacune d'elles est issue dans un fichier de description de manière à former une représentation composée de la séquence vidéo, dite représentation intermédiaire, dont le débit est compris entre le débit de la première représentation et le débit de la seconde représentation, de génération d'un fichier manifeste comprenant une URL vers ladite représentation intermédiaire, de transmission du fichier manifeste vers un terminal, et, à la réception d'une requête de téléchargement correspondant à l'URL comprise dans le fichier manifeste, de transmission des données correspondantes vers le terminal:
L'invention concerne également un serveur comprenant un dispositif de composition tel que décrit ci-dessus.

L'invention concerne également un terminal comprenant un dispositif de composition tel que décrit ci-dessus.

Selon un autre aspect, l'invention concerne également un dispositif de téléchargement d'une représentation intermédiaire tel qu'il comporte une unité de traitement et une mémoire dans laquelle sont enregistrées des instructions de programme d'ordinateur adaptées pour être exécutées par l'unité de traitement et configurées pour mettre en œuvre, au moyen d'une interface de communication, des étapes de : réception d'un fichier manifeste comprenant au moins une URL vers une représentation composée d'au moins une tuile provenant d'une première représentation et d'au moins une tuile provenant d'une seconde représentation, le débit de ladite représentation intermédiaire étant compris entre le débit de la première représentation et le débit de la seconde représentation, de transmission d'une requête de téléchargement de ladite représentation intermédiaire, et de réception de ladite représentation intermédiaire.

Selon une réalisation particulière, l'invention concerne un terminal de décodage comprenant un dispositif de téléchargement d'une représentation intermédiaire.

L'invention concerne également un programme d'ordinateur comportant des instructions pour l'exécution des étapes du procédé de composition et/ou pour l'exécution des étapes du procédé de téléchargement, lorsque ledit programme est exécuté par un processeur.

Enfin, l'invention concerne un support d'informations lisible par un processeur sur lequel est enregistré un programme d'ordinateur comprenant des instructions pour l'exécution des étapes du procédé de et/ou des instructions pour l'exécution du procédé de téléchargement.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé de composition et/ou du procédé de téléchargement tels que définis ci-dessus.

Les serveurs, dispositifs et programmes présentent au moins des avantages analogues à ceux conférés par le procédé de composition décrit ci-dessus.

### LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La figure 1 représente une architecture réseau simplifiée adaptée pour la mise en œuvre de l'invention selon un mode de réalisation particulier,
- Les figures 2a, 2b et 2c représentent un exemple de composition d'un flux vidéo à partir de deux représentations d'un même flux offrant une qualité d'image différente,
- La figure 3 illustre les principales étapes du procédé de composition selon un mode particulier de réalisation,
- Les figures 4a et 4b représentent, à titre d'exemples, deux façons d'agencer des tuiles provenant de différentes représentations.
- La figure 5 illustre l'architecture d'un dispositif adapté pour mettre en œuvre le procédé de composition selon une réalisation particulière.
- La figure 6 illustre l'architecture d'un dispositif adapté pour mettre en œuvre le procédé de composition selon une autre réalisation particulière.
- La figure 7 illustre l'architecture d'un dispositif adapté pour mettre en œuvre le procédé de téléchargement d'une représentation selon un mode de réalisation particulier.

### DESCRIPTION DÉTAILLÉE D'UN MODE DE RÉALISATION

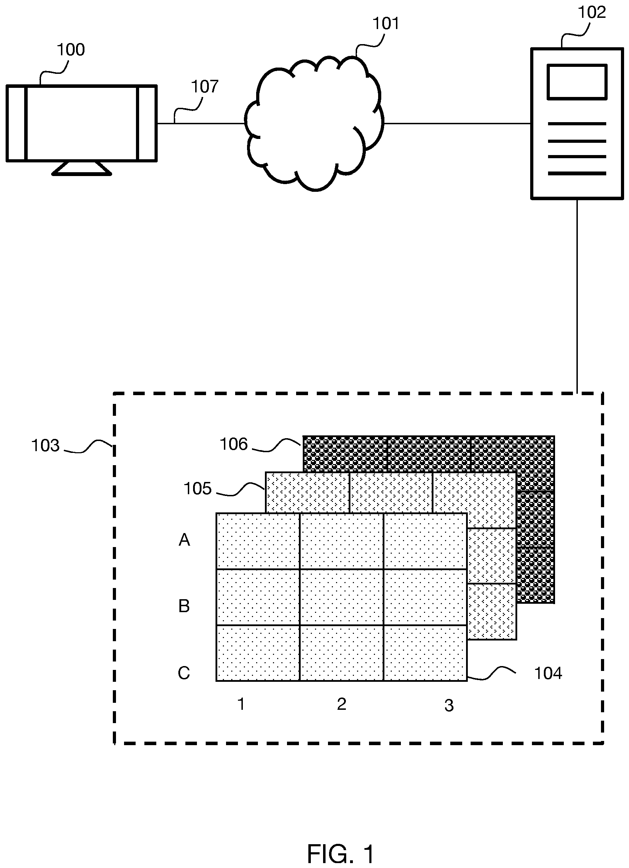

La **figure 1** représente une architecture simplifiée dans laquelle est mis en œuvre le procédé de composition selon l'invention.

Une telle architecture comprend un terminal client 100, un réseau de communication 101 et un serveur de diffusion de contenus 102. Le serveur de diffusion de contenus 102 est adapté pour fournir un contenu au terminal 100 par l'intermédiaire du réseau 101 qui peut être par exemple un réseau de type IP (pour Internet Protocol en anglais). Le terminal 100 est connecté au réseau 101 par l'intermédiaire d'une liaison 107.

Dans cet exemple, le serveur de diffusion met à disposition du terminal 100 un contenu audiovisuel 103. Le serveur 102 héberge différentes représentations du contenu, chacune des représentations étant disponible selon un profil d'encodage particulier. Par exemple, le contenu audiovisuel 103 a été encodé au préalable en une première représentation 104 codée à 500KB/s, une deuxième représentation 105 codée à 2Mo/s et une troisième représentation 106 codée à 4Mo/s. De cette façon, le serveur 102 peut fournir au terminal 100 une version du contenu audiovisuel adaptée à la bande passante dont il dispose. Par exemple, si la connexion 107 autorise un débit maximum de 1Mo/s, le serveur 102 pourra lui fournir la représentation 500KB/s de façon à garantir une bonne qualité de service. De manière classique, les différentes représentations disponibles pour le contenu 103 sont annoncées dans un fichier manifeste téléchargeable par le terminal 100 afin que celui-ci puisse demander la fourniture de la représentation la plus adaptée.

Dans l'exemple présenté ici pour illustrer l'invention, l'architecture de streaming est basée sur l'utilisation du protocole HTTP (pour HyperText Transport Protocol) et met en œuvre la norme MPEG DASH (pour « Dynamic Adaptative Streaming over HTTP » en anglais). Il s'agit de la norme ISO/IEC 23009-1 :2012(E) dédié au streaming de contenus multimédias sur Internet. Le codage du contenu vidéo est ici réalisé selon la norme HEVC (High Efficiency Video Coding, ISO/IEC 23008-2 MPEG-H Part 2 et ITU-T H.265).

Lors de l'encodage des différentes représentations, l'encodeur vidéo a été configuré d'une manière adaptée pour que les images qui composent la séquence soient divisées en régions rectangulaires appelées « tuiles » formant une partition des images selon une grille prédéfinie. La partition des images en tuiles est une option offerte par exemple par la norme HEVC dans le but de permettre une parallélisation des processus d'encodage et de décodage sur les architectures informatiques multi-cœurs et/ou multi-processeurs. Par exemple, la séquence vidéo peut être partitionnée en tuiles selon la méthode décrite dans la demande de brevet US2014307775 « METHOD AND DEVICE FOR PARTITIONING AN IMAGE ».

Par exemple, pour garantir une indépendance des tuiles lors du décodage, les vecteurs de mouvement sont contraints à l'intérieur des tuiles. Ainsi, le décodage d'une tuile ne nécessite pas d'information contenue dans une autre tuile. D'autre part, pour éviter la propagation d'information d'une tuile à l'autre lors de l'application de filtres « in-loop » tels que le « deblocking filter » ou le « Sample Adaptative Offset filter », ces filtres sont désactivés aux frontières des tuiles en positionnant le paramètre « loop_filter_accross_tiles_enabled_flag » à zéro dans le PPS (Picture Parameter Set). Selon le standard HEVC, les tuiles sont définies dans le PPS (Picure Parameter Set). Le PPS contient des éléments qui spécifient le nombre de tuiles en lignes et de colonnes dans une image ainsi que leur taille. Une séquence vidéo HEVC est divisée en différents segments de données qui contiennent en particulier les données des tuiles et l'emplacement de ces données dans le segment. Une entête de segment comporte des informations sur le contenu et les paramètres du segment, et en particulier des données permettant d'accéder aux données des tuiles.

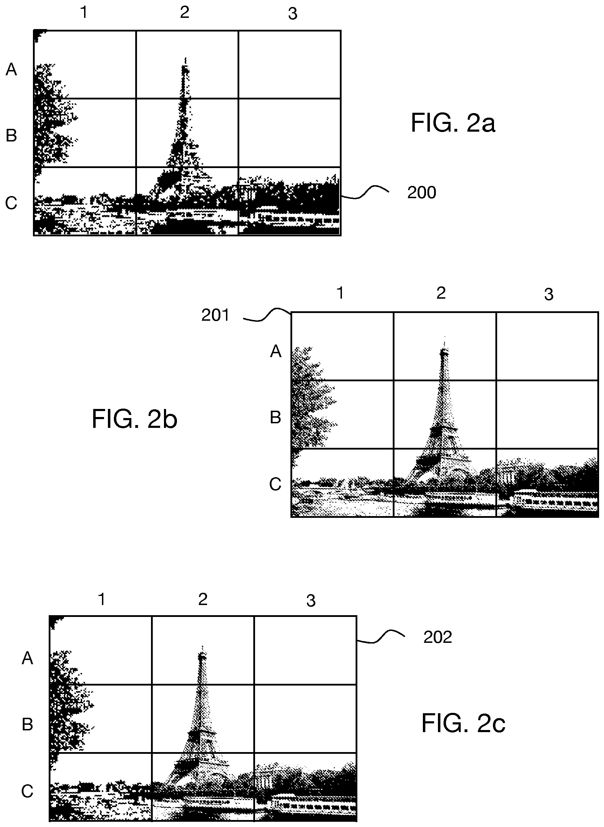

Les **figures 2a et 2b** illustrent un exemple de partitionnement d'une séquence vidéo. La figure 2a illustre une première représentation 200 de basse qualité d'une séquence vidéo. Les images de cette séquence sont divisées en 9 tuiles selon une grille de 3 lignes et 3 colonnes. La figure 2b illustre une seconde représentation 201 de la même séquence, encodée en haute qualité. Les images correspondant au même instant dans la représentation 200 et la représentation 201 sont partitionnées de manière identique. Ces représentations ont été encodées avec les précautions décrites ci-avant de manière à ce que les tuiles soient décodables indépendamment les unes des autres. Par exemple, la tuile C2 de la représentation 200 ne comporte pas de référence à des informations contenues dans les tuiles adjacentes et peut être décodée indépendamment des autres tuiles de l'image. En revanche, cette tuile C2 peut comporter des références à cette même tuile C2 dans les images précédentes ou suivantes, lorsqu'elles font partie du même GoP (Group Of Picture).

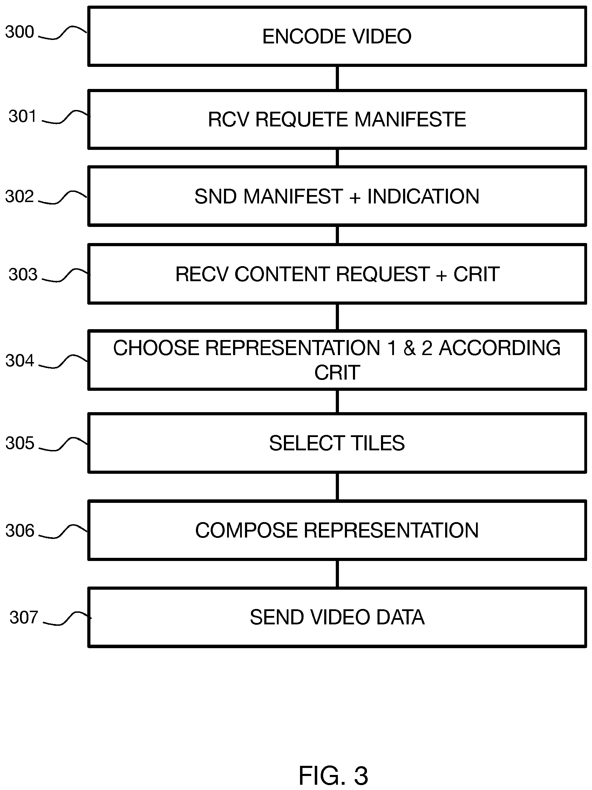

On se réfère maintenant à **la** **figure 3** qui illustre les principales étapes du procédé de composition selon un mode particulier de réalisation dans lequel le procédé est implémenté sur le serveur 102.

Lors d'une étape préalable **300,** une séquence vidéo est encodée conformément à la norme HEVC, selon différents profils d'encodage. L'encodeur vidéo est configuré de manière à partitionner les images en tuiles décodables indépendamment les unes des autres comme décrit ci-avant. La configuration des tuiles dans les différentes représentations est identique pour un instant donné. Les différentes représentations de la séquence sont mises à disposition des utilisateurs sur un serveur, chacune étant accessibles au travers d'une URL (Uniform Resource Locator) particulière. Les différentes représentations disponibles ainsi que leurs caractéristiques sont consignées dans un fichier MPD (Media Présentation Description). Par exemple, le fichier MPD (également appelé « manifeste ») peut comprendre, pour chacune des représentations disponibles, des URLs d'accès aux différents segments d'une représentation, le débit d'encodage, la résolution vidéo, un index des segments... Une représentation est par exemple déclarée de la manière suivante dans un fichier manifeste conforme à la norme DASH :

```
 <Representation id="1" bandwidth="4000000" width="1280" height="720">
  <SegmentList duration='3600'>
   <SegmentURL media= http://orange.com/moviel.mp4'/>
  </SegmentList>
  </Representation>
```

À l'étape **301,** le serveur reçoit une requête de téléchargement d'un fichier manifeste. La requête provient d'un terminal comme par exemple le terminal 100 de la figure 1 dont la connexion 107 est limitée à 1 Mo/s.

Lors de l'étape **302,** le serveur transmet au terminal un fichier manifeste décrivant les représentations disponibles pour une séquence vidéo. Ce fichier comporte en outre une indication représentative de la capacité du serveur à composer une représentation intermédiaire de la séquence vidéo. Ainsi, le terminal de décodage 100 peut déterminer, à la réception du fichier manifeste, que le serveur est apte à générer des représentations intermédiaires de la séquence. Pour cela, le serveur peut indiquer un paramètre particulier dans la déclaration d'une représentation. Par exemple, la déclaration suivante utilise à cette fin la valeur particulière « custom » dans l'attribut « bandwidth » :

```
 <Representation id="1" bandwidth="custom" width="1280" height="720">
  <SegmentList duration='3600'>
   <SegmentURL media= http://orange.com/movie2.mp4'/>
  </SegmentList>
  </Representation>
```

Cette indication peut également être communiquée par d'autres moyens, comme par exemple en utilisant un paramètre, une valeur ou un attribut particulier dans l'entête du fichier manifeste.

À la réception du manifeste, le terminal 100 peut alors requêter une représentation optimale au regard de la bande passante dont il dispose. Pour cela, il peut émettre une requête de téléchargement vers l'URL indiquée dans le manifeste, la requête comprenant en particulier une indication du débit maximum souhaité pour la représentation. La requête comporte un critère d'obtention d'une représentation intermédiaire qui peut être un critère de qualité souhaité ou dans l'exemple décrit ici, un critère de débit maximal souhaité. Le débit maximum est par exemple communiqué au serveur via un paramètre d'une requête http. Dans cet exemple, le terminal 100 peut ainsi indiquer qu'il souhaite télécharger une représentation intermédiaire dont le débit n'excède pas la bande passante de la liaison 107, c'est-à-dire 1Mo/s. Une telle requête est reçue par le serveur à l'étape **303.**

À l'étape **304,** le serveur 102 analyse la requête reçue et obtient le débit vidéo maximum souhaité par le terminal de décodage. À partir de cette information de débit, le serveur sélectionne parmi les représentations préencodées dont il dispose, une première représentation préencodée dont le débit est inférieur au débit maximum indiqué par le terminal et une seconde représentation préencodée dont le débit est supérieur au débit maximum indiqué par le terminal. Par exemple, à la réception d'une requête indiquant un débit maximum de 1Mo/s, le serveur 102 sélectionne une première représentation 104 encodée à 500KB/s et une seconde représentation 105 encodée à 2Mo/s.

Lors d'une étape **305,** le serveur sélectionne un ensemble de tuiles formant une partition des images de la séquence et composé de tuiles provenant de la première et de la seconde représentation, chaque tuile étant associée à des données compressées dans ladite représentation, afin d'obtenir une représentation intermédiaire dont le débit est compris entre le débit d'encodage de la première représentation et le débit d'encodage de la seconde représentation. Par exemple, à partir d'une première représentation 200 illustrée à la **figure 2a** et d'une seconde représentation 201 illustrée à la **figure 2b****,** le serveur peut composer une représentation intermédiaire 202 illustrée à la **figure 2c** à partir des données compressées associées à l'ensemble de tuiles sélectionné. La figure 2c est ainsi composée d'un ensemble de tuiles {A1, B1, C1} issues de la première représentation 200 et d'un ensemble de tuiles {A2, B2, C2, A3, B3, C3} issues de la seconde représentation 201. Le débit de la représentation 202 est ainsi compris entre le débit de la première représentation 200 et celui de la seconde représentation 201. La sélection peut s'effectuer selon un critère autre que le débit, en fonction du critère d'obtention de la représentation souhaitée. Cela peut être par exemple un critère de qualité ou un critère de préservation d'une zone particulière de l'image comme cela sera décrit ultérieurement.

A ce stade, selon un mode particulier de réalisation, le serveur peut calculer le débit de la représentation composée de façon à le comparer avec le débit maximal indiqué par le terminal de décodage. Ainsi, si le débit de la représentation intermédiaire composée est supérieur au débit maximal indiqué par le terminal de décodage, le serveur peut sélectionner un nouvel ensemble de tuiles à partir des représentations, le nouvel ensemble comprenant une part plus importante de tuiles provenant de la représentation dont le débit est inférieur au débit indiqué par le terminal. Ainsi, après un certain nombre d'itérations, le serveur peut obtenir une représentation intermédiaire dont le débit est optimal au regard de la contrainte fixée par le terminal de décodage.

Selon une autre réalisation particulière, l'ensemble de tuiles sélectionné initialement peut comprendre toutes les tuiles d'une représentation à l'exception d'une tuile, les tuiles d'une autre représentation étant ajoutées une à une à chaque itération, tant que le débit de la composition n'est pas optimal au regard de la limite fixée par le terminal. Par exemple, un premier ensemble de tuiles peut être constitué des tuiles {B1, C1, A2, B2, C2, A3, B3, C3} provenant de la représentation de haute qualité 201 de la **figure 2b** et de la seule tuile {A1} provenant de la représentation 200. Si le débit de la composition résultante est supérieur au seuil fixé par le terminal, le serveur modifie le premier et le second ensemble de façon à remplacer une tuile de haute qualité par une tuile de basse qualité. Pour cela, le premier ensemble peut comporter les tuiles {C1, A2, B2, C2, A3, B3, C3} issues de la représentation 201 et le second ensemble les tuiles {A1, B1} issues du second ensemble. Les étapes sont ainsi répétées jusqu'à ce que le débit de la composition résultante soit inférieur ou égale au débit maximal fixé.

Selon un mode de réalisation particulier, au moins un ensemble de tuiles est sélectionné préalablement à la réception d'une requête de téléchargement, l'agencement des tuiles et la représentation dont chacune d'elles est issue étant mémorisés dans un fichier de description enregistré par exemple dans espace de stockage associé au serveur. Par exemple, le fichier de description peut comprendre, pour chacune des images de la séquence, et pour chaque tuile d'une image, un lien vers les données des tuiles dans les représentations correspondantes. Les représentations ainsi composées peuvent être déclarées dans un fichier manifeste au même titre que des représentations préencodées. De cette façon, à la réception d'une requête de téléchargement désignant une représentation ainsi mémorisée, les données correspondantes sont transmises au terminal de décodage. Ce mode de réalisation permet d'augmenter le nombre de représentations disponibles pour une séquence vidéo tout en ne nécessitant que peu d'espace de stockage supplémentaire.

Selon une réalisation particulière de l'invention, la sélection d'un ensemble de tuiles est réalisée en fonction du débit d'encodage de chacune des tuiles. Le procédé permet ainsi de constituer l'ensemble des tuiles selon le poids, en termes d'occupation de bande passante, de chacune d'elles, ce qui présente l'avantage de connaître à l'avance le débit de la représentation intermédiaire résultant de l'assemblage de ces tuiles. En particulier, lorsque la représentation est composée avec une contrainte de débit maximum, le procédé permet de respecter cette contrainte dès la constitution de l'ensemble de tuiles. Il est possible d'obtenir le poids d'une tuile particulière à partir des paramètres contenus dans le flux encodé. Par exemple, en consultant le SPS (Segment Parameter Set, le PPS (Picture Parameter Set), il est possible de connaître le type et la position des tuiles dans les différentes représentations et d'en déduire leur poids respectif.

Selon une autre réalisation particulière, certaines zones de l'image sont privilégiées lors de la sélection des tuiles. Par exemple, lorsque des zones de l'image présentent un intérêt particulier, les tuiles correspondant à ces emplacements sont sélectionnées de préférence dans une représentation de bonne qualité. A l'inverse, les zones de l'image présentant peu d'intérêt peuvent être sélectionnées dans une représentation de basse qualité. Les zones d'intérêt peuvent être définies automatiquement, en utilisant par exemple des techniques d'analyse d'image comme la détection de visages. Ainsi, lors de l'étape de sélection des tuiles, les tuiles contenant des zones d'intérêt sont sélectionnées de préférence dans une représentation de bonne qualité.

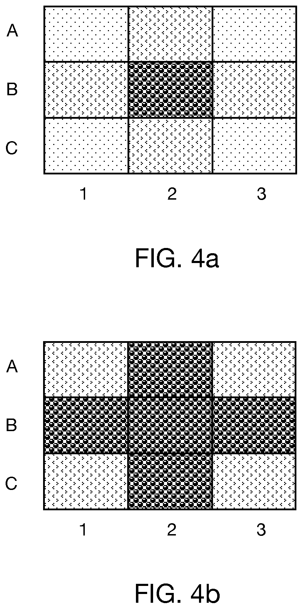

Selon une réalisation particulière, les zones de l'image à privilégier lors de la sélection de l'ensemble de tuiles sont indiquées dans un message transmis par un terminal de décodage vidéo. Ainsi, le procédé peut recevoir un message lui indiquant une zone à privilégier ou encore un agencement de tuiles prédéterminé. Le terminal de décodage 100 représenté sur la **figure 1** comprend par exemple une interface tactile permettant à un utilisateur de sélectionner une zone de l'image. Suite à la sélection d'une zone particulière par l'utilisateur, le terminal de décodage émet un message à destination du serveur de diffusion, le message comprenant en particulier les coordonnées de la zone sélectionnée et de façon optionnelle une information de qualité désirée pour la zone. A la réception de ce message, le serveur de diffusion peut sélectionner les tuiles correspondant à la zone indiquée dans une représentation préencodée de haute qualité. De cette façon, le procédé permet à un utilisateur de désigner les zones d'une vidéo qu'il souhaite voir en bonne qualité. Le terminal 100 peut également proposer à l'utilisateur différents arrangements prédéterminés de tuiles. Par exemple, le terminal peut proposer à l'utilisateur de composer une représentation intermédiaire basée sur l'un des agencements de tuiles représentés sur les **figures 4a et 4b****,** afin de privilégier automatiquement certaines zones de l'image. Le terminal peut offrir une interface permettant à l'utilisateur de sélectionner un arrangement particulier avant d'émettre un message vers le serveur lorsqu'un arrangement est validé, le message comprenant les indications nécessaires au serveur pour composer une représentation intermédiaire selon l'arrangement choisi.

Selon un mode particulier de réalisation, une tuile est sélectionnée en fonction de la sélection réalisée pour des tuiles adjacentes. Par exemple, lorsqu'une représentation intermédiaire est composée à partir des données compressées associées à aux tuiles provenant des trois représentations 104, 105 et 106 préencodées illustrées à la **figure 1****,** il peut arriver qu'une première tuile soit sélectionnée dans la représentation de basse qualité 104 et qu'une tuile adjacente à cette première tuile soit sélectionnée dans la représentation 106 de haute qualité. Le fait que ces tuiles de qualité très différente soient contigües pose un problème d'homogénéité de l'image composée et peut porter préjudice à la qualité perçue par l'utilisateur. Pour éviter cela, le procédé propose de sélectionner une tuile dans une représentation particulière en fonction des choix effectués pour les tuiles adjacentes. Par exemple, la **figure 4a** illustre une représentation intermédiaire composée à partir de tuiles issues des représentations préencodées 104, 105 et 106 décrites en référence à la figure 1. Une tuile de haute qualité a été sélectionnée à la position B2, au centre de l'image. Les tuiles adjacentes A2, B1, C2 et B3 sont alors sélectionnées dans la représentation de qualité moyenne 105, les tuiles A1, C1, A3 et C3 étant sélectionnées dans la représentation de basse qualité 104. De cette façon, le procédé peut limiter les écarts de qualité en bordure de tuiles.

À l'étape **306,** lorsqu'un ensemble de tuiles satisfaisant au critère de débit maximum de la représentation est sélectionné, le serveur peut extraire les données correspondantes lorsqu'elles sont demandées par le terminal de décodage. Les données correspondant à une tuile particulière d'une représentation peuvent être obtenues par exemple selon la méthode décrite dans la demande de brevet US2014307775 « METHOD AND DEVICE FOR PARTITIONING AN IMAGE ». À partir des données des tuiles, chaque image codée est reconstruite puis transmise au terminal de décodage lors d'une étape 307.

Selon une réalisation particulière, le procédé est mis en œuvre sur un terminal de décodage. Dans ce cas de figure, le terminal utilise le fichier MPD afin de connaître les URLs d'accès aux segments des différentes représentations disponibles. Pour un segment donné, le terminal télécharge à partir d'au moins deux représentations les données du segment lui permettant de sélectionner un ensemble de tuiles. Par exemple, le terminal peut télécharger, à l'aide d'une requête « byte-range », les SIDX (Segment Index), SSIX (SubSegment IndeX), PPS (Picture Parameter Set), SPS (Segment Parameter Set) et SEI (Supplemental Enhancement Information) afin de connaitre la disposition des tuiles dans l'image et l'emplacement des données correspondant à ces tuiles dans le segment. Le terminal dispose alors des informations nécessaires à l'exécution des étapes 305 et 306 décrites en référence à la **figure 3****.**

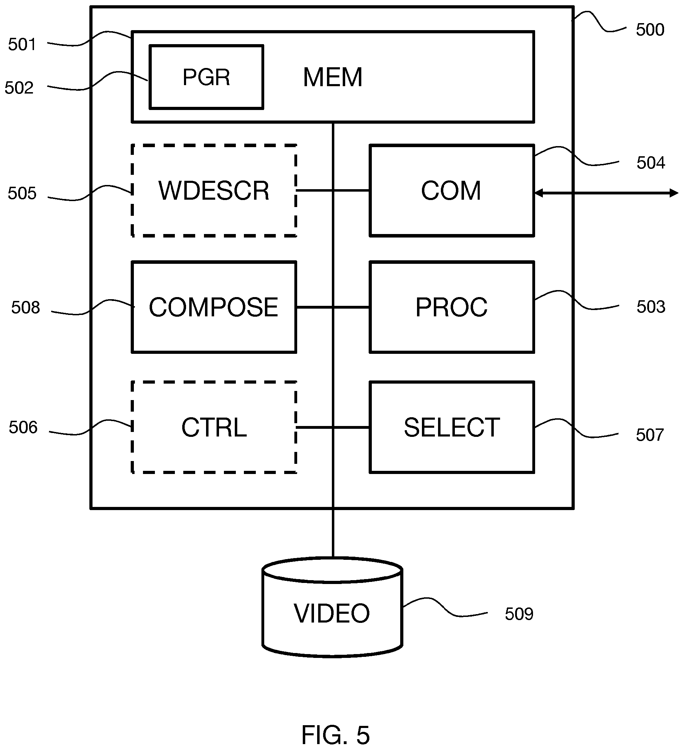

La **figure 5** illustre un dispositif 500 mettant en œuvre le procédé de composition, selon un mode particulier de réalisation de l'invention. Le dispositif comprend un espace de stockage 501, par exemple une mémoire MEM, une unité de traitement 503 équipée par exemple d'un processeur PROC. L'unité de traitement peut être pilotée par un programme 502, par exemple un programme d'ordinateur PGR, mettant en œuvre le procédé de composition d'une représentation intermédiaire tel que décrit dans l'invention en référence à la figure 3, et notamment les étapes de sélection, selon au moins un critère de sélection, d'un ensemble de tuiles formant une partition de la séquence et composé de tuiles provenant des au moins deux représentations, et de composition d'une représentation intermédiaire de la séquence vidéo à partir des données compressées de l'ensemble de tuiles sélectionné.

À l'initialisation, les instructions du programme d'ordinateur 502 sont par exemple chargées dans une mémoire RAM (Random Access Memory en anglais) avant d'être exécutées par le processeur de l'unité de traitement 503. Le processeur de l'unité de traitement 503 met en œuvre les étapes du procédé de composition selon les instructions du programme d'ordinateur 502.

Pour cela, le dispositif comprend, outre la mémoire 501, des moyens de communication 504 (COM) permettant au dispositif de se connecter à un réseau de télécommunication et d'échanger des données avec d'autres dispositifs par l'intermédiaire du réseau de télécommunications, et par exemple de recevoir des requêtes de téléchargement d'un fichier manifeste ou d'au moins une partie d'une représentation d'un contenu vidéo. Ces moyens de communication peuvent par exemple être une interface réseau et peuvent également servir à transmettre un fichier manifeste comportant une indication représentative d'une capacité du dispositif à composer une représentation intermédiaire d'une séquence vidéo et/ou au moins une partie d'une représentation d'un contenu vidéo. Le dispositif comprend également une unité 507 de sélection, selon au moins un critère de sélection, d'un ensemble de tuiles formant une partition de la séquence et composé de tuiles provenant des au moins deux représentations, et une unité 508 de composition d'une représentation intermédiaire de la séquence vidéo à partir des données compressées de l'ensemble de tuiles sélectionné. Selon un mode particulier de réalisation, le dispositif peut également comprendre une unité 505 (WDESCR) de génération d'une indication représentative d'une capacité à composer une représentation intermédiaire d'une séquence vidéo et une unité 506 (CTRL) de calcul du débit résultant de la représentation intermédiaire et de vérification que le débit résultant est inférieur à un seuil prédéterminé. Selon un autre mode de réalisation, le dispositif peut comprendre une base de données 509 pour l'enregistrement de représentations intermédiaires sous la forme d'une description de l'assemblage de tuiles et des représentations préencodées dont elles sont issues.

Selon un mode particulier de réalisation, le dispositif peut être intégré dans un serveur, comme par exemple un serveur de diffusion vidéo.

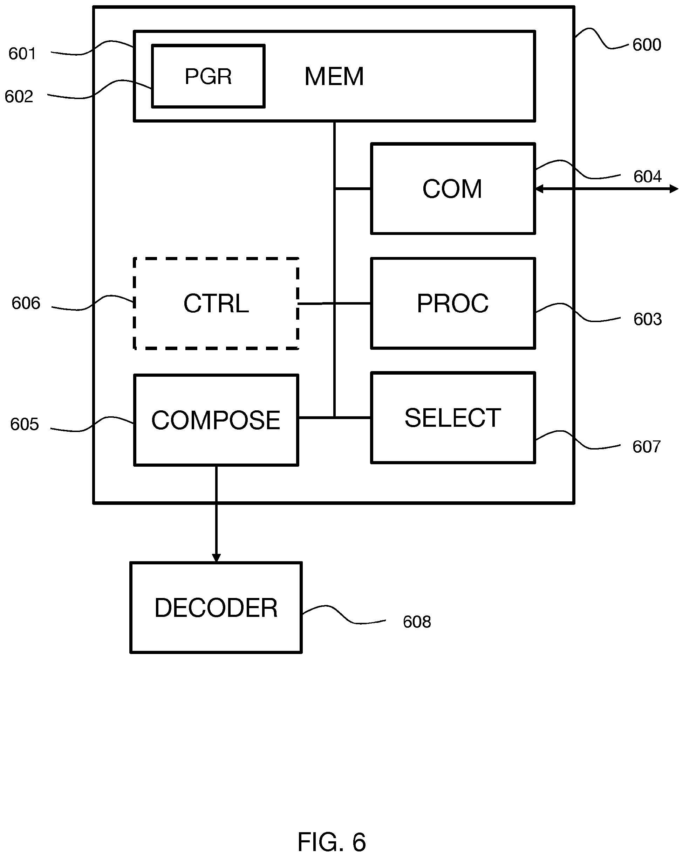

La **figure 6** illustre un autre dispositif 600 mettant en œuvre le procédé de composition selon un mode particulier de réalisation de l'invention adapté pour être utilisé dans un terminal de décodage vidéo. Le dispositif comprend un espace de stockage 601, par exemple une mémoire MEM, une unité de traitement 603 équipée par exemple d'un processeur PROC. L'unité de traitement peut être pilotée par un programme 602, par exemple un programme d'ordinateur PGR, mettant en œuvre le procédé de composition d'une représentation intermédiaire tel que décrit dans l'invention, et notamment les étapes de sélection, selon au moins un critère de sélection, d'un ensemble de tuiles formant une partition de la séquence et composé de tuiles provenant des au moins deux représentations, et de composition d'une représentation intermédiaire de la séquence vidéo à partir des données compressées de l'ensemble de tuiles sélectionné.

À l'initialisation, les instructions du programme d'ordinateur 602 sont par exemple chargées dans une mémoire RAM (Random Access Memory en anglais) avant d'être exécutées par le processeur de l'unité de traitement 603. Le processeur de l'unité de traitement 603 met en œuvre les étapes du procédé de composition selon les instructions du programme d'ordinateur 602.

Pour cela, le dispositif comprend, outre la mémoire 601, des moyens de communication 604 (COM) permettant au dispositif de se connecter à un réseau de télécommunication et d'échanger des données avec d'autres dispositifs par l'intermédiaire du réseau de télécommunications. Ces moyens de communication peuvent par exemple être une interface réseau et peuvent servir à télécharger au moins une partie d'une représentation d'un contenu vidéo comme par exemple des paramètres d'encodage tels que des données SIDX, SSIX, SPS, PPS et SEI dans le cas d'un contenu encodé selon la norme HEVC, ou encore les données correspondant à des tuiles provenant de différentes représentations. Le dispositif comprend également une unité 607 (SELECT) de sélection, selon au moins un critère de sélection, d'un ensemble de tuiles formant une partition de la séquence et composé de tuiles provenant des au moins deux représentations, et une unité 605 (COMPOSE) de composition d'une représentation intermédiaire de la séquence vidéo à partir des données compressées de l'ensemble de tuiles sélectionné, adapté pour reconstruire un flux vidéo conforme à la norme de codage et pour transmettre ce flux à un décodeur vidéo 608. Selon un mode particulier de réalisation, le dispositif peut également comprendre une unité 606 (CTRL) d'estimation de la bande passante disponible, de calcul du débit résultant d'une représentation intermédiaire composée et de vérification que le débit résultant est inférieur à un seuil prédéterminé.

Selon un mode particulier de réalisation, le dispositif peut être intégré dans un terminal de décodage vidéo de type téléphone mobile, set-top box, décodeur vidéo, télévision connectée ou encore par exemple dans un ordinateur personnel.

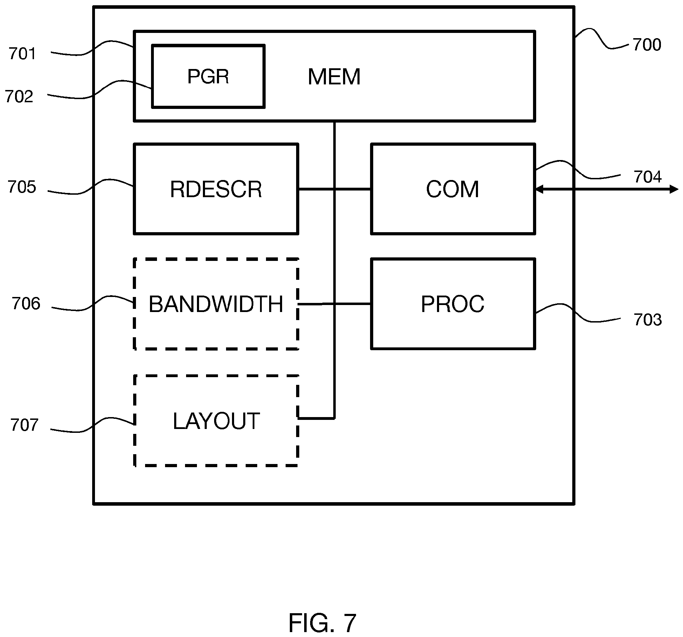

La **figure 7** illustre un dispositif 700 mettant en œuvre le procédé de téléchargement d'une représentation intermédiaire selon un mode particulier de réalisation. Le dispositif comprend un espace de stockage 701, par exemple une mémoire MEM, une unité de traitement 703 équipée par exemple d'un processeur PROC. L'unité de traitement peut être pilotée par un programme 702, par exemple un programme d'ordinateur PGR, mettant en œuvre le procédé de téléchargement d'une représentation intermédiaire tel que décrit dans l'invention, et notamment les étapes de lecture d'une indication représentative de la capacité d'un serveur à composer une représentation intermédiaire d'une séquence vidéo, de transmission d'un critère de sélection des tuiles, et de réception d'une représentation intermédiaire composée selon le critère de sélection transmis.

À l'initialisation, les instructions du programme d'ordinateur 702 sont par exemple chargées dans une mémoire RAM (Random Access Memory en anglais) avant d'être exécutées par le processeur de l'unité de traitement 703. Le processeur de l'unité de traitement 703 met en œuvre les étapes du procédé de téléchargement selon les instructions du programme d'ordinateur 702.

Pour cela, le dispositif comprend, outre la mémoire 701, des moyens de communication 704 (COM) permettant au dispositif de se connecter à un réseau de télécommunication et d'échanger des données avec d'autres dispositifs par l'intermédiaire du réseau de télécommunications. Ces moyens de communication peuvent par exemple être une interface réseau et peuvent servir à obtenir une indication représentative d'une capacité du dispositif à composer une représentation intermédiaire d'une séquence vidéo en téléchargeant par exemple un fichier manifeste comportant une telle indication. Les moyens de communication 704 peuvent également servir à transmettre un critère de sélection des tuiles à un serveur de diffusion vidéo adapté pour composer une représentation intermédiaire selon la présente invention et à recevoir une représentation intermédiaire composée selon le critère transmis. Selon une réalisation particulière, le dispositif comprend une unité 706 (BANDWIDTH) adapté pour estimer la bande passante disponible pour recevoir un flux vidéo. Il peut s'agir par exemple d'une unité de surveillance du niveau de remplissage d'une mémoire tampon d'un décodeur vidéo. Le dispositif peut également comporter une interface utilisateur 707 (LAYOUT) adaptée pour définir un critère de sélection des tuiles, le critère pouvant correspondre par exemple à un ensemble de tuiles à sélectionner dans une représentation prédéterminée.

Selon un mode particulier de réalisation, le dispositif peut être intégré dans un terminal de décodage vidéo de type téléphone mobile, set-top box, décodeur vidéo, télévision connectée ou encore par exemple dans un ordinateur personnel.

## Revendications

1. Procédé de composition d'une représentation intermédiaire d'une séquence vidéo à partir d'au moins une première et une seconde représentation de ladite séquence vidéo, lesdites au moins une première et une seconde représentations étant partitionnées spatialement en une pluralité de tuiles, chaque tuile étant associée à des données compressées dans la représentation correspondante, le procédé étant **caractérisé en ce que** les tuiles sont décodables indépendamment les unes des autres et **en ce qu'**à un instant donné les au moins une première et une seconde représentations sont partitionnées de manière identique, le procédé comportant les étapes suivantes :
- Sélection (305), selon au moins un critère de qualité, d'un ensemble de tuiles formant une partition de la séquence, l'ensemble comprenant au moins une tuile provenant de la première représentation et au moins une tuile provenant de la seconde représentation,
- mémorisation de l'agencement des tuiles sélectionnées et de la représentation dont chacune d'elles est issue dans un fichier de description de manière à former une représentation composée de la séquence vidéo, dite représentation intermédiaire, dont le débit est compris entre le débit de la première représentation et le débit de la seconde représentation, et
- génération d'un fichier manifeste comprenant une URL vers ladite représentation intermédiaire,
- transmission (302) du fichier manifeste vers un terminal, et à la réception d'une requête de téléchargement correspondant à l'URL comprise dans le fichier manifeste, transmission des données correspondantes vers le terminal.

2. Procédé selon la revendication 1, **caractérisé en ce qu'**il comprend en outre des étapes de :
- Calcul du débit résultant de la représentation intermédiaire,
- Vérification que le débit résultant est inférieur à un seuil prédéterminé, et
- Sélection d'un nouvel ensemble de tuiles lorsque le débit résultant est supérieur au seuil prédéterminé.

3. Procédé selon l'une quelconque des revendications 1 ou 2, **caractérisé en ce que** le au moins un critère de qualité comprend le débit d'encodage des tuiles.

4. Procédé selon l'une quelconque des revendications précédentes, **caractérisé en ce que** l'étape de sélection des tuiles est en outre basée sur une analyse du contenu des images.

5. Procédé selon l'une des revendications précédentes, **caractérisé en ce que** la sélection d'une tuile est réalisée en outre en fonction d'un critère de qualité d'au moins une tuile adjacente.

6. Procédé de téléchargement d'une représentation intermédiaire sur un terminal **caractérisé en ce qu'**il comporte les étapes suivantes :
- réception d'un fichier manifeste comprenant au moins une URL vers une représentation composée d'au moins une tuile provenant d'une première représentation et d'au moins une tuile provenant d'une seconde représentation, le débit de ladite représentation intermédiaire étant compris entre le débit de la première représentation et le débit de la seconde représentation,
- Transmission d'une requête de téléchargement de ladite représentation intermédiaire,
- Réception de ladite représentation intermédiaire.

7. Dispositif de composition d'une représentation intermédiaire d'une séquence vidéo à partir d'au moins une première et une seconde représentation de ladite séquence vidéo, lesdites au moins une première et une seconde représentations étant partitionnées spatialement en une pluralité de tuiles, chaque tuile étant associée à des données compressées dans la représentation correspondante, le dispositif étant **caractérisé en ce que** les tuiles sont décodables indépendamment les unes des autres et **en ce qu'**à un instant donné les au moins une première et une seconde représentations sont partitionnées de manière identique, le dispositif comprenant des modules de:
- Sélection (507), selon au moins un critère de qualité, d'un ensemble de tuiles formant une partition de la séquence, l'ensemble comprenant au moins une tuile provenant de la première représentation et au moins une tuile provenant de la seconde représentation,
- mémorisation (509) de l'agencement des tuiles sélectionnées et de la représentation dont chacune d'elles est issue dans un fichier de description de manière à former une représentation composée de la séquence vidéo, dite représentation intermédiaire, dont le débit est compris entre le débit de la première représentation et le débit de la seconde représentation,
- génération (505) d'un fichier manifeste comprenant une URL vers ladite représentation intermédiaire,
- transmission (504) du fichier manifeste vers un terminal,
- à la réception d'une requête de téléchargement correspondant à l'URL comprise dans le fichier manifeste, transmission des données correspondantes vers le terminal.

8. Serveur comprenant un dispositif de composition d'une représentation intermédiaire d'une séquence vidéo selon la revendication 7.

9. Serveur selon la revendication 8 comportant en outre des moyens de transmission d'une indication représentative d'une capacité à composer une représentation intermédiaire d'une séquence vidéo.

10. Dispositif (600) de téléchargement d'une représentation intermédiaire **caractérisé en ce qu'**il comporte une unité de traitement (603) et une mémoire (601) dans laquelle sont enregistrées des instructions de programme d'ordinateur (602) adaptées pour être exécutées par l'unité de traitement et configurées pour mettre en œuvre, au moyen d'une interface de communication (604), des étapes de :
- réception d'un fichier manifeste comprenant au moins une URL vers une représentation composée d'au moins une tuile provenant d'une première représentation et d'au moins une tuile provenant d'une seconde représentation, le débit de ladite représentation intermédiaire étant compris entre le débit de la première représentation et le débit de la seconde représentation,
- transmission d'une requête de téléchargement de ladite représentation intermédiaire,
- réception de ladite représentation intermédiaire.

11. Terminal comprenant un dispositif de téléchargement d'une représentation intermédiaire selon la revendication 10.

12. Programme d'ordinateur comportant des instructions pour l'exécution des étapes du procédé de composition selon l'une quelconque des revendications 1 à 5 et/ou des instructions pour l'exécution du procédé de téléchargement la revendication 6, lorsque ledit programme est exécuté sur un processeur.

13. Support d'informations lisible par un processeur sur lequel est enregistré un programme d'ordinateur comprenant des instructions pour l'exécution des étapes du procédé de composition selon l'une quelconque des revendications 1 à 5 et/ou des instructions pour l'exécution du procédé de téléchargement selon la revendication 6.

## Patentansprüche

1. Verfahren zur Zusammenstellung einer Zwischendarstellung einer Videosequenz ausgehend von mindestens einer ersten und einer zweiten Darstellung der Videosequenz, wobei die mindestens eine erste und eine zweite Darstellung räumlich in eine Vielzahl von Unterabschnitten partitioniert sind, wobei jeder Unterabschnitt komprimierten Daten in der entsprechenden Darstellung zugeordnet ist, wobei das Verfahren **dadurch gekennzeichnet ist, dass** die Unterabschnitte unabhängig voneinander decodierbar sind, und dass zu einem gegebenen Zeitpunkt die mindestens eine erste und eine zweite Darstellung in gleicher Weise partitioniert sind, wobei das Verfahren die folgenden Schritte aufweist:
- Auswahl (305), gemäß mindestens einem Qualitätskriterium, einer Einheit von Unterabschnitten, die eine Partition der Sequenz bildet, wobei die Einheit mindestens einen von der ersten Darstellung kommenden Unterabschnitt und mindestens einen von der zweiten Darstellung kommenden Unterabschnitt enthält,
- Speicherung der Anordnung der ausgewählten Unterabschnitte und der Darstellung, von der jeder von ihnen stammt, in einer Beschreibungsdatei, um eine zusammengestellte Darstellung der Videosequenz zu bilden, Zwischendarstellung genannt, deren Bitrate zwischen der Bitrate der ersten Darstellung und der Bitrate der zweiten Darstellung liegt, und
- Erzeugung einer eine URL zur Zwischendarstellung enthaltenden Manifest-Datei,
- Übertragung (302) der Manifest-Datei zu einem Endgerät, und bei Empfang einer Download-Anforderung entsprechend der in der Manifest-Datei enthaltenen URL, Übertragung der entsprechenden Daten zum Endgerät.

2. Verfahren nach Anspruch 1, **dadurch gekennzeichnet, dass** es außerdem die folgenden Schritte enthält:
- Berechnung der resultierenden Bitrate der Zwischendarstellung,
- Überprüfung, dass die resultierende Bitrate niedriger als eine vorbestimmte Schwelle ist, und
- Auswahl einer neuen Einheit von Unterabschnitten, wenn die resultierende Bitrate höher als die vorbestimmte Schwelle ist.

3. Verfahren nach einem der Ansprüche 1 oder 2, **dadurch gekennzeichnet, dass** das mindestens eine Qualitätskriterium die Codierungsbitrate der Unterabschnitte enthält.

4. Verfahren nach einem der vorhergehenden Ansprüche, **dadurch gekennzeichnet, dass** der Schritt der Auswahl der Unterabschnitte außerdem auf einer Analyse des Inhalts der Bilder beruht.

5. Verfahren nach einem der vorhergehenden Ansprüche, **dadurch gekennzeichnet, dass** die Auswahl eines Unterabschnitts außerdem abhängig von einem Qualitätskriterium mindestens eines benachbarten Unterabschnitts durchgeführt wird.

6. Download-Verfahren einer Zwischendarstellung auf ein Endgerät, **dadurch gekennzeichnet, dass** es die folgenden Schritte aufweist:
- Empfang einer Manifest-Datei, die mindestens eine URL zu einer Darstellung enthält, die aus mindestens einem von einer ersten Darstellung kommenden Unterabschnitt und mindestens einem von einer zweiten Darstellung kommenden Unterabschnitt zusammengestellt ist, wobei die Bitrate der Zwischendarstellung zwischen der Bitrate der ersten Darstellung und der Bitrate der zweiten Darstellung liegt,
- Übertragung einer Download-Anforderung der Zwischendarstellung,
- Empfang der Zwischendarstellung.

7. Vorrichtung zur Zusammenstellung einer Zwischendarstellung einer Videosequenz ausgehend von mindestens einer ersten und einer zweiten Darstellung der Videosequenz, wobei die mindestens eine erste und eine zweite Darstellung räumlich in eine Vielzahl von Unterabschnitten partitioniert sind, wobei jeder Unterabschnitt komprimierten Daten in der entsprechenden Darstellung zugeordnet ist, wobei die Vorrichtung **dadurch gekennzeichnet ist, dass** die Unterabschnitte unabhängig voneinander decodierbar sind, und dass zu einem gegebenen Zeitpunkt die mindestens eine erste und eine zweite Darstellung in gleicher Weise partitioniert sind, wobei die Vorrichtung folgende Module enthält:
- Auswahl (507), gemäß mindestens einem Qualitätskriterium, einer Einheit von Unterabschnitten, die eine Partition der Sequenz bilden, wobei die Einheit mindestens einen von der ersten Darstellung kommenden Unterabschnitt und mindestens einen von der zweiten Darstellung kommenden Unterabschnitt enthält,
- Speicherung (509) der Anordnung der ausgewählten Unterabschnitte und der Darstellung, von der jeder von ihnen stammt, in einer Beschreibungsdatei, um eine zusammengestellte Darstellung der Videosequenz zu bilden, Zwischendarstellung genannt, deren Bitrate zwischen der Bitrate der ersten Darstellung und der Bitrate der zweiten Darstellung liegt,
- Erzeugung (505) einer Manifest-Datei, die eine URL zu der Zwischendarstellung enthält,
- Übertragung (504) der Manifest-Datei zu einem Endgerät,
- bei Empfang einer Download-Anforderung entsprechend der in der Manifest-Datei enthaltenen URL, Übertragung der entsprechenden Daten zum Endgerät.

8. Server, der eine Vorrichtung zur Zusammenstellung einer Zwischendarstellung einer Videosequenz nach Anspruch 7 enthält.

9. Server nach Anspruch 8, der außerdem Einrichtungen zur Übertragung einer Angabe enthält, die für eine Fähigkeit repräsentativ ist, eine Zwischendarstellung einer Videosequenz zusammenzustellen.

10. Vorrichtung (600) zum Download einer Zwischendarstellung, **dadurch gekennzeichnet, dass** sie eine Verarbeitungseinheit (603) und einen Speicher (601) aufweist, in dem Computerprogrammanweisungen (602) gespeichert sind, die geeignet sind, von der Verarbeitungseinheit ausgeführt zu werden, und konfiguriert sind, mittels einer Kommunikationsschnittstelle (604) folgende Schritte durchzuführen:
- Empfang einer Manifest-Datei, die mindestens eine URL zu einer Darstellung enthält, die aus mindestens einem von einer ersten Darstellung kommenden Unterabschnitt und mindestens einem von einer zweiten Darstellung kommenden Unterabschnitt zusammengestellt ist, wobei die Bitrate der Zwischendarstellung zwischen der Bitrate der ersten Darstellung und der Bitrate der zweiten Darstellung liegt,
- Übertragung einer Download-Anforderung der Zwischendarstellung,
- Empfang der Zwischendarstellung.

11. Endgerät, das eine Download-Vorrichtung einer Zwischendarstellung nach Anspruch 10 enthält.

12. Computerprogramm, das Anweisungen zur Ausführung der Schritte des Zusammenstellungsverfahrens nach einem der Ansprüche 1 bis 5 und/oder Anweisungen zur Ausführung des Download-Verfahrens nach Anspruch 6 enthält, wenn das Programm auf einem Prozessor ausgeführt wird.

13. Informationsträger, der von einem Prozessor lesbar ist, auf dem ein Computerprogramm gespeichert ist, das Anweisungen zur Ausführung der Schritte des Zusammenstellungsverfahrens nach einem der Ansprüche 1 bis 5 und/oder Anweisungen zur Ausführung des Download-Verfahrens nach Anspruch 6 enthält.

## Claims

1. Method for composing an intermediate representation of a video sequence from at least one first and one second representation of said video sequence, said at least one first and one second representation being spatially partitioned into a plurality of tiles, each tile being associated with compressed data in the corresponding representation, the method being **characterized in that** the tiles can be decoded independently of one another and **in that**, at a given instant, the at least one first and one second representation are partitioned identically, the method comprising the following steps:
- selection (305), according to at least one quality criterion, of a set of tiles forming a partition of the sequence, the set comprising at least one tile originating from the first representation and at least one tile originating from the second representation,
- storage of the arrangement of the selected tiles and of the representation from which each of them originates in a description file, so as to form a representation composed of the video sequence, called intermediate representation, the bit rate of which is between the bit rate of the first representation and the bit rate of the second representation, and
- generation of a manifest file comprising a URL to said intermediate representation,
- transmission (302) of the manifest file to a terminal, and upon receipt of a download request corresponding to the URL contained in the manifest file, transmission of the corresponding data to the terminal.

2. Method according to Claim 1, **characterized in that** it further comprises steps of:
- computation of the resulting bit rate of the intermediate representation,
- checking that the resulting bit rate is below a predetermined threshold, and
- selection of a new set of tiles when the resulting bit rate is above the predetermined threshold.

3. Method according to either one of Claims 1 and 2, **characterized in that** the at least one quality criterion comprises the tile encoding bit rate.

4. Method according to any one of the preceding claims, **characterized in that** the tile selection step is also based on an analysis of the content of the images.

5. Method according to one of the preceding claims, **characterized in that** the selection of a tile is made also according to a quality criterion of at least one adjacent tile.

6. Method for downloading an intermediate representation on a terminal, **characterized in that** it comprises the following steps:
- receipt of a manifest file comprising at least one URL to a representation composed of at least one tile originating from a first representation and of at least one tile originating from a second representation, the bit rate of said intermediate representation being between the bit rate of the first representation and the bit rate of the second representation,
- transmission of a request to download said intermediate representation,
- receipt of said intermediate representation.

7. Device for composing an intermediate representation of a video sequence from at least one first and one second representation of said video sequence, said at least one first and one second representation being spatially partitioned into a plurality of tiles, each tile being associated with compressed data in the corresponding representation, the device being **characterized in that** the tiles can be decoded independently of one another and **in that**, at a given instant, the at least one first and one second representation are partitioned identically, the device comprising the following modules:
- a selection module (507) for selecting, according to at least one quality criterion, a set of tiles forming a partition of the sequence, the set comprising at least one tile originating from the first representation and at least one tile originating from the second representation,
- a storage module (509) for storing the arrangement of the selected tiles and the representation from which each of them originates in a description file, so as to form a representation composed of the video sequence, called intermediate representation, the bit rate of which is between the bit rate of the first representation and the bit rate of the second representation,
- a generation module (505) for generating a manifest file comprising a URL to said intermediate representation,
- a transmission module (504) for transmitting the manifest file to a terminal,
- upon receipt of a download request corresponding to the URL contained in the manifest file, a transmission module for transmitting the corresponding data to the terminal.

8. Server comprising a device for composing an intermediate representation of a video sequence according to Claim 7.

9. Server according to Claim 8, further comprising means for transmitting an indication representative of a capacity to compose an intermediate representation of a video sequence.

10. Device (600) for downloading an intermediate representation, **characterized in that** it comprises a processing unit (603) and a memory (601) in which there are stored computer program instructions (602) designed to be executed by the processing unit and configured to implement, by means of a communication interface (604), steps of:
- receipt of a manifest file comprising at least one URL to a representation composed of at least one tile originating from a first representation and of at least one tile originating from a second representation, the bit rate of said intermediate representation being between the bit rate of the first representation and the bit rate of the second representation,
- transmission of a request to download said intermediate representation,
- receipt of said intermediate representation.

11. Terminal comprising a device for downloading an intermediate representation according to Claim 10.

12. Computer program comprising instructions for executing the steps of the composition method according to any one of Claims 1 to 5 and/or instructions for executing the downloading method according to Claim 6 when said program is run on a processor.

13. Processor-readable information medium on which there is stored a computer program comprising instructions for executing the steps of the composition method according to any one of Claims 1 to 5 and/or instructions for executing the downloading method according to Claim 6.
